Europäisches Patentamt

European Patent Office

Office européen des brevets

(19)

(11) Veröffentlichungsnummer: **0 096 743**
**B1**

(12) EUROPÄISCHE PATENTSCHRIFT

(45) Veröffentlichungstag der Patentschrift:
06.08.86

(51) Int. Cl.⁴: **H 04 B 3/44**

(21) Anmeldenummer: 83104438.3

(22) Anmeldetag: 20.01.81

(60) Veröffentlichungsnummer der früheren Anmeldung
nach Art. 76 EPÜ: 0033471

(54) Schaltungsanordnung zum Schliessen der Fernspeiseschleife einer Fernspeiseeinrichtung.

(30) Priorität: 31.01.80 DE 3003515

(43) Veröffentlichungstag der Anmeldung:
28.12.83 Patentblatt 83/52

(45) Bekanntmachung des Hinweises auf die Patenterteilung:
06.08.86 Patentblatt 86/32

(84) Benannte Vertragsstaaten:
AT BE CH DE FR GB IT LI LU NL SE

(56) Entgegenhaltungen:
DE - B - 1 265 215
DE - B - 1 762 599
DE - C - 1 012 686

SIEMENS-ZEITSCHRIFT, Band 45, 1971, Beiheft,
"Nachrichten-Übertragungstechnik", Seiten 99-102,
Erlangen, DE., E. BRAUN et al.: "Fehlerortung in
TF-Kabelstrecken mit Unterflurverstärkern"

(73) Patentinhaber: Siemens Aktiengesellschaft Berlin und
München, Wittelsbacherplatz 2, D-8000 München 2 (DE)

(72) Erfinder: Ziegler, Alfred, Dipl.-Ing., Laimer-Platz 1,
D-8000 München 21 (DE)

## Beschreibung

Die Erfindung bezieht sich auf eine wie im Oberbegriff des Patentanspruchs 1 angegebene Schaltungsanordnung.

Eine derartige Schaltungsanordnung ist bereits aus der DE-B 1 265 215 bekannt.

Eine Schaltungsanordnung zum Schliessen der Fernspeiseschleife einer Fernspeiseeinrichtung ist ferner bereits aus der Siemens-Zeitschrift 45 (1971), Beiheft «Nachrichtenübertragungstechnik», Seite 102 bekannt. Diese bekannte Schaltung dient zum Schliessen einer Fernspeiseschleife für reihengespeiste Unterstationen bei Streckenunterbrechungen. Zur Aufrechterhaltung der Speisung wenigstens in einem Teil des Übertragungssystems ist vorgesehen, dass in jeder Zwischenverstärkerstelle eine Relaisspule und die Verbraucherwiderstände der Verstärker in verschiedenen Fernspeisestrompfade eingeschleift sind. Die Querverbindung mit dem Relaiskontakt ist über eine Weichenschaltung, bestehend aus je einer den Verbraucherwiderständen und der Relaisspule parallel geschalteten Reihenschaltung von wenigstens zwei Dioden hergestellt.

Durch diese Massnahme soll in Fernspeisesystemen mit gleichmässiger Lastverteilung die für eine Fehlerortun·] erforderliche eindeutige Lage von Relaisspule und Querverbindung im Fernspeiseweg unabhängig davon erreicht werden, ob der Relaiszweig des Schaltzusatzes im einen oder anderen Fernspeisezweig angeordnet ist. Der Schaltzusatz ist ein Vierpol, der mit jeweils einem Klemmenpaar an den der Signalquelle zugewandten ersten und an den der Speisestelle abgewandten zweiten Teil der Fernspeiseschleife bzw. des Speiseadernpaares angeschlossen ist. Dadurch, dass die Relaisspule und damit der eine Längszweig des Vierpols von Zwischenverstärkerstelle zu Zwischenverstärkerstelle abwechselnd in den einen oder anderen Fernspeisestrompfad eingefügt ist und die Energieflussrichtung in der Fernspeiseschleife immer gleich ist, ergibt sich für den abwechselnd umgekehrt eingeschleiften Vierpol jeweils ein Wechsel der Energieflussrichtung.

Enthalten die ferngespeisten Stationen, die insbesondere Zwischenverstärkerstellen von Weitverkehrssystemen sein können, sogenannte Schaltzusätze, die im Falle einer Streckenunterbrechung den Fernspeisekreis vor dem fehlerhaften Fernspeiseabschnitt bzw. Verstärkerfeld wieder schliessen, so benötigen die hierzu erforderlichen Relais im ungestörten Streckenteil, bzw. bei fehlerfreiem Betrieb auf der gesamten Übertragungsstrecke, eine zum Offenhalten des Schaltkontaktes notwendige Erregungsleistung, die am Orte jeder ferngespeisten Station einen entsprechenden Spannungsabfall zur Folge hat.

Es ist wünschenswert, diesen Spannungsabfall so gering wie möglich zu halten, da er bei vorgegebener maximaler Fernspeisespannung eine entsprechende Verkürzung der Fernspeisereichweite bedingt.

Es ist bekannt, eine Wicklungsumschaltung vorzusehen, mit deren Hilfe bei erregtem Relais ein derart bemessener Teil der Wicklung kurzgeschlossen wird, dass die systemabhängigen Anzugs- und Abfallwerte für das Relais erreicht werden (Siemens-Zeitschrift 45 (1971), Beiheft «Nachrichten-Übertragungstechnik», Seite 102).

Hierbei steht für die Haltewicklung der Relaisspule in der Praxis nur ein relativ geringer Teil des Wickelraumes zur Verfügung, welcher die erforderliche Halte-Leistung und damit den dafür nötigen Spannungsabfall an der Wicklung bestimmt.·

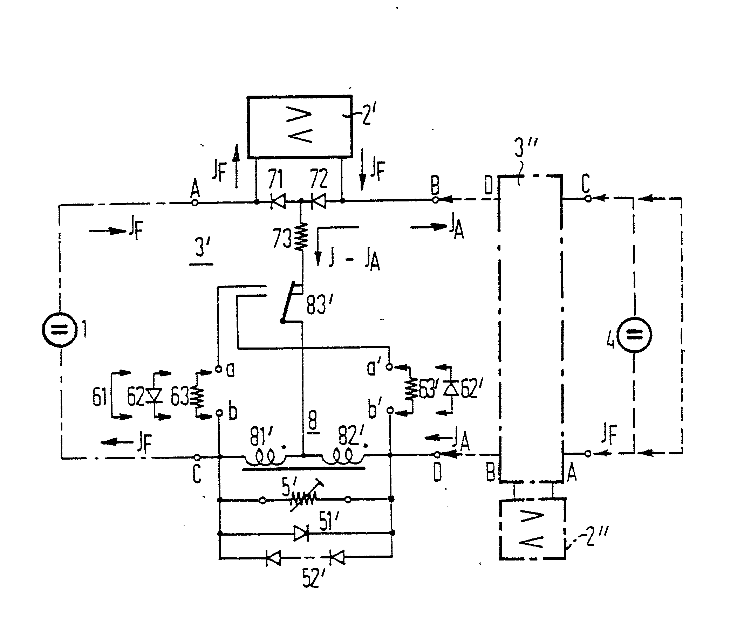

Ein weiter verringerter Spannungsabfall am relais ergibt sich, wenn eine der beiden Teilwicklungen in der bei geschlossenem Ruhekontakt geschlossenen ersatzweisen Fernspeiseschleife und die andere Teilwicklung in dem unterbrochenen Teil der betriebsmässigen Fernspeiseschleife liegt. Eine derartige Schaltungsanordnung ist in Fig. 1 der DE-AS 1 265 215 gezeigt.

Ist bei einer derartigen Schaltungsanordnung der im Querzweig liegende Ruhekontakt geschlossen, so wird eine der beiden Teilwicklungen vom konstanten Fernspeisestrom durchflossen, so dass das Relais vormagnetisiert wird. Das Relais spricht daher schon mit geringeren Windungszahlen dann an, wenn in der anderen Teilwicklung lediglich ein Ansprechstrom fliesst. Es steht dann für die Halteerregung ein besonders grosser Wickelraum zur Verfügung. Dadurch ergibt sich ein verringerter Spannungsabfall am Schaltzusatz, so dass sich die Reichweite der Fernspeisung beträchtlich vergrössert. Es kann aber auch bei gleichbleibender Reichweite der Fernspeisung anstelle eines empfindlichen gepolten Relais ein ungepoltes Relais Verwendung finden.

Die Vormagnetisierung des Relais durch den Fernspeisestrom kann jedoch dazu führen, dass das erregte Relais nicht in der gewünschten Weise abfällt.

Aufgabe der Erfindung ist es daher, die Schaltungsanordnung derart auszubilden, dass sich die Vormagnetisierung nicht nachteilig auf das Abfallverhalten des Relais auswirkt.

Gemäss der Erfindung wird die Schaltungsanordnung in der im kennzeichnenden Teil des Patentanspruchs 1 angegebenen Weise ausgebildet.

Eine derartige Schaltungsanordnung hat den Vorteil, dass sie sich besonders leicht an verschiedene Anwendungsfälle anpassen lässt. Insbesondere kann man das Relais für eine Verwendung der Schaltungsanordnung in Fernspeiseeinrichtungen mit einseitiger Speisung der Fernspeiseschleife, bei der die Relaiswicklungen in ein und derselben Ader der Fernspeiseleitung liegen, mit unterschiedlich bemessenen Teilwicklungen versehen.

Es gibt andererseits Fernspeiseeinrichtungen, bei denen die Schaltungsanordnung mit der Relaiswicklung bzw. mit dem einen Längszweig des Vierpols von Verbraucherstelle zu Verbraucherstelle abwechselnd in die eine oder andere Ader der Fernspeiseleitung eingefügt ist. Darüber hinaus können zum selbsttätigen Schliessen der Fernspeiseschleife dienende Schaltzusätze auch in Fernspeiseeinrichtungen Verwendung finden, bei denen eine beidseitige redundante Speisung mit möglichst genau übereinstimmenden Gleichströmen vorgesehen ist. Für derartige Anwendungsfälle wird die Schaltungsanordnung zweckmässigerweise derart ausgebildet, dass die Windungszahlen der beiden Teilwicklungen gleich gross bemessen sind.

In weiterer Ausgestaltung der Erfindung sind der Wicklung des Relais zum Schutz gegen Beeinflussung Dioden parallel geschaltet. Da hierbei für die eine Polarität die Summe der Schwellenspannungen der Dioden grösser als die Ansprechspannung des Relais sein muss, kommt man wegen der Verringerung der Ansprechspannung auch in vorteilhafter Weise mit einer geringeren Zahl von Dioden aus.

Versieht man in Weiterbildung der Erfindung die Serienschaltung der beiden Teilwicklungen mit Anschlüssen für einen insbesondere veränderbaren Überbrückungswiderstand, so lässt sich durch eine entsprechende Einstellung bzw. Auswahl dieses Widerstandes für jedes Relais erreichen, dass sich beim Nennwert des Fernspeisestromes jeweils der gleiche Ansprechstrom ergibt.

Zweckmässigerweise liegen zwei Arbeitskontakte des Relais jeweils mit ihrem Fusspunkt am Verbindungspunkt der beiden Teilwicklungen und sind mit ihren Arbeitsseiten über je einen der Überbrückungszweige an die äusseren Anschlüsse der Serienschaltung geführt.

Der Überbrückungszweig wird dabei zweckmässigerweise jeweils so bemessen, dass die vorgegebene Haltebedingung für das Relais gerade noch mit Sicherheit erreicht wird. Zweckmässigerweise lassen sich Überbrückungszweige wahlweise als ohmscher Widerstand und/oder als Dioden oder als Kurzschlussverbindung ausbilden.

Enthalten die beiden Überbrückungszweige jeweils einen Diodenzweig, so kann man in vorteilhafter Weise den Spannungsabfall an der Wicklung des Relais auf einen nur wenig über den Haltewert des Relais liegende Grösse begrenzen.

Die beiden Überbrückungszweige können in unterschiedlicher Weise ausgebildet werden, insbesondere derart, dass nach Ansprechen des Relais die zur Vormagnetisierung dienende Wicklung kurzgeschlossen und die zweite zum Ansprechen dienende Wicklung mit einer oder mehreren Dioden zur Spannungsbegrenzung überbrückt werden. Es können in Abhängigkeit von den Relaiseigenschaften, insbesondere Verhältnis Ansprech- zu Abfallerregung und vom Einsatzfall, insbesondere von den Ansprech- und Abfallstrombedingungen, auch andere Beschaltungen vorteilhaft sein.

Es kann sich ferner als zweckmässig erweisen, die Schaltungsanordnung derart auszubilden, dass zwei Arbeitskontakte des Relais jeweils mit ihrem Fusspunkt am Verbindungspunkt der beiden Teilwicklungen liegen und mit ihren Arbeitsseiten über je einen der Überbrückungszweige an die äusseren Anschlüsse der Serienschaltung geführt sind.

In Weiterbildung der Erfindung kann man bei beidseitiger redundanter Speisung der Fernspeiseschleife und/oder bei einer Anordnung der Wicklung des Relais abwechselnd im einen oder im anderen Zweig der Fernspeiseleitung beide Überbrückungszweige in gleicher Weise ausbilden.

Zweckmässigerweise werden die Kontakte des Relais durch einen Umschaltekontakt gebildet.

Die Erfindung wird anhand des in der Figur dargestellten Ausführungsbeispieles näher erläutert.

Die Figur zeigt einen Schaltzusatz, der sich an verschiedene Anwendungsfälle leicht anpassen lässt.

Entsprechend der Figur werden die Zwischenstellen einer Nachrichtenübertragungseinrichtung mittels Reihenspeisung mit konstantem Gleichstrom $I_F$ gespeist. In jeder Zwischenstelle, die eine Regenerator- oder Verstärkerstelle sein kann, ist ein Verbraucher vorgesehen, dessen Eingang vom Fernspeise-Gleichstrom $I_F$ durchflossen ist. Der Verbraucher ist jeweils ein Leitungsverstärker 2', der je Übertragungsrichtung der Nachrichtenübertragungsstrecke einen Einzelverstärker enthält. Die beiden Einzelverstärker werden, was in der Figur nicht näher dargestellt ist, unmittelbar oder über einen Gleichstromumrichter parallel gespeist, so dass sich für die Schaltungsanordnung zur Fernspeisung eine Parallel-Reihenspeisung ergibt.

Die Verbraucher werden im Fernspeisekreis in Reihenschaltung betrieben. Die Eingänge der Verbraucher sind, wie bei den Schaltzusätzen 3' und 3'' ersichtlich, von Zwischenstelle zu Zwischenstelle alternierend in den einen und den anderen Fernspeise-Strompfad geschaltet, um eine gleichmässige Lastverteilung zu erzielen bzw. eine Kompensation der Beeinflussung durch induzierte Wechselströme auf der Strecke zu erreichen. Sie können jedoch gegebenenfalls auch in ein und dieselbe Fernspeiseader bzw. ein und denselben Fernspeise-Strompfad eingefügt sein.

Das Fernspeise-Adernpaar ist an beiden Enden jeweils an ein Fernspeisegerät 1 bzw. 4 angeschlossen, so dass sich eine beidseitige Speisung mit gleichzeitig vorhandener Geräteredundanz ergibt. Dabei ist im Fernspeisekreis eine Reihenschaltung der beiden Fernspeisegeräte 1 und 4 wirksam. Jedes dieser beiden Fernspeisegeräte ist in der Lage, die ganze Fernspeisestrecke nach dem Prinzip der sogenannten «heissen Reserve» zu versorgen.

Sobald eine Verbindung zwischen den Speiseadern auftritt, speist das Fernspeisegerät 1 bis zu dieser Stelle. Das Fernspeisegerät 4 speist ebenfalls bis zur Verbindungsstelle, so dass die gesamte Strecke weiterhin versorgt bleibt.

Ein unterbrechungsfreier Betrieb der Zwischenstellen auch bei einer Unterbrechung an einer beliebigen Stelle des Fernspeise-Adernpaares wird dadurch erreicht, dass in jeder Zwischenstelle ein Schaltzusatz 3' bzw. 3'' vorgesehen ist, der bei einer Unterbrechung einer oder beider Speiseadern den Fernspeisekreis vor dieser Unterbrechungsstelle so schliesst, dass die Zwischenstellen weiter versorgt werden.

Nach Beseitigung der Unterbrechung wird die Adernverbindung am Schaltzusatz selbsttätig wieder aufgehoben.

Der Schaltzusatz wird auf der einen Seite mit den Anschlüssen A und C, auf der anderen Seite mit den Anschlüssen B und D in den Fernspeisekreis eingeschaltet.

Die Anschlüsse A und B, an die der Verstärker 2' angeschlossen ist, sind über eine Serienschaltung aus den Dioden 71 und 72 verbunden. Zwischen den Anschlüssen C und D liegt eine Serienschaltung der Teilwicklungen 81' und 82' des Relais 8, die durch den Widerstand 5' überbrückt ist. Dabei ist der Wicklungsanfang der einen mit dem Wicklungsende der anderen Teilwicklung verbunden. Zwischen den Verbindungspunkten der beiden Dioden 71, 72 bzw. der Teilwicklungen 81' und 82' liegt die Reihenschaltung des Widerstandes 73 mit der Ruheseite des doppelten Umschaltekontaktes 83' des Relais 8.

Tritt die Streckenunterbrechung in Richtung der Anschlüsse B, D auf, so wird der Verstärker 2' aus der Richtung der Anschlüsse A bis C weiterbetrieben. Der Speisestrom fliesst dann vom Anschluss A kommend über den Eingang des Verstärkers 2' (Diode 71 sperrt), Diode 72 und Widerstand 73 zu dem auf seiner Ruheseite geschlossenen Relaiskontakt 83' und von dort über die Teilwicklung 81' und Anschluss C wieder zurück. Das Relais 8 überwacht die fehlerhafte Richtung der Anschlüsse B und D.

Tritt die Streckenunterbrechung in Richtung der Anschlüsse A und C auf, so werden die Verstärker 2' aus der Richtung der Anschlüsse B und D weiter betrieben. Der Stromfluss verläuft dann vom Anschluss D über die Teilwicklung 82', den Kontakt 83', den Widerstand 73, die Diode 71, den Verstärker 2' zum Anschluss B. Das Relais 8 überwacht nun die fehlerhafte Richtung der Anschlüsse A und C.

Ersetzt man die Stromquelle 4 durch einen Kurzschluss, so ergibt sich eine Speisung der Strecke allein durch die Stromquelle 1.

Mit der in der Figur 1 gezeigten Schaltungsanordnung, die für den alternierenden Einsatz der Zwischenverstärker oder für eine beidseitige redundante Fernspeisung geeignet ist, ergeben sich bedeutend geringere Spannungsabfälle als bei vergleichbaren bekannten Anordnungen. Die Relaisspule enthält zwei gleichartige Teilwicklungen 81', 82', deren Mittenverbindung zum Umschaltekontakt 83' geführt ist. Bei geschlossenem Kontakt wird immer eine der beiden Teilwicklungen vom konstanten Fernspeisestrom $I_F$ durchflossen, wodurch eine Vormagnetisierung des Relais 8 erfolgt. Die Windungszahlen n sind gleich gross und so gewählt, dass in diesem Zustand das Relais 8 die Ansprecherregung $\varnothing_{An}$ erhält, wenn in der anderen Wicklung der Ansprechstrom $I_{An}$ fliesst. Es gilt:

$$I_F \cdot n + I_A \cdot n = \varnothing_{An} \cdot$$

Nach dem Öffnen des Umschaltkontaktes 83' kann von der Arbeitsseite des Kontaktes 83' ein Nebenschluss an der Stelle a, b und/oder der Stelle a', b' zu einer oder zu beiden Teilwicklungen 81', 82' parallelgeschaltet werden, dessen Leitwert so gewählt ist, dass die vorgegebene Haltebedingung für das Relais 8 erreicht wird. Damit wird auch der Spannungsabfall auf eine nur wenig über dem Haltewert liegende Grösse begrenzt.

Nachdem durch die Vormagnetisierung mit dem Fernspeisestrom dessen Toleranz, z.B. ± 6 mA bei 300 mA ± 2%, in vollem Umfang den Ansprechwert des Relais beeinflusst, ist es zweckmässig, die fertigungsbedingte Streuung der Ansprechwerte der verschiedenen Relais zu eliminieren. Hierzu dient ein Widerstand 5, der als Shunt zur Relaisspule liegt. Dieser wird für jedes Relais so gewählt, dass sich beim Nennwert des Fernspeisestromes der gleiche Ansprechstrom ergibt. Mit dieser Einstellung liegen z.B. bei einer Toleranz des Fernspeisestromes von 294 bis 306 mA die Ansprechwerte in einem zulässigen Bereich zwischen 68 mA und 56 mA.

Der Abfallstrom $I_{Ab}$ für das Relais errechnet sich wie folgt:

$$I_{Ab} = \frac{1}{2} \, (I_F + I_{An}) \, \frac{\varnothing_{Ab}}{\varnothing_{Ar}}$$

$I_F$ Fernspeisestrom
$I_{An}$ Ansprechstrom
$\varnothing_{An}$ Ansprecherregung
$\varnothing_{Ab}$ Abfallerregung

Dieser Wert $I_{Ab}$ lässt sich erforderlichenfalls durch Shunten der Relaiswicklungen nach dem Ansprechen mit Hilfe der Schaltmittel 61, 62, 63, 62' und/oder 63' erreichen.

**Patentansprüche**

1. Schaltungsanordnung zum selbsttätigen Schliessen einer ersatzweisen Fernspeiseschleife bei Unterbrechung der betriebsmässig vorgesehenen Fernspeiseschleife einer Fernspeiseeinrichtung, die elektrische Verbraucher mittels Gleichstrom-Reihenspeisung speist, wobei die Schaltungsanordnung ein Relais enthält und ein Ruhekontakt des Relais zusammen mit einem Widerstand in einem Querzweig angeordnet ist, wobei die Wicklung des Relais aus zwei in Serie zueinander angeordneten Teilwicklungen besteht, die Serienschaltung beider Teilwicklungen in einer Ader der Fernspeiseleitung eingefügt ist, so dass der Querzweig auf der einen Seite an den Verbindungspunkt der beiden Teilwicklungen angeschlossen ist und eine der beiden Teilwicklungen in der bei geschlossenem Ruhekontakt geschlossenen ersatzweisen Fernspeiseschleife und die andere Teilwicklung in dem unterbrochenen Teil der betriebsmässigen Fernspeiseschleife liegt, dadurch gekennzeichnet, dass in der anderen Ader der Fernspeiseleitung eine parallel zu einem Verbraucher liegende, aus zwei Diodenzweigen (71, 72) bestehende Weichenschaltung vorgesehen ist, und dass der Querzweig (73, 83') auf der anderen Seite am Verbindungspunkt der beiden Diodenzweige (71, 72) liegt, und dass wenigstens eine der beiden Teilwicklungen (81', 82') mit einer Serienschaltung aus einem Arbeitskontakt des Relais (8) und einem Überbrückungszweig (a, b; a', b') versehen ist.

2. Schaltungsanordnung nach Anspruch 1, dadurch gekennzeichnet, dass die Windungszahlen der beiden Teilwicklungen (81', 82') wenigstens annähernd gleich gross bemessen sind.

3. Schaltungsanordnung nach Anspruch 1 oder 2, dadurch gekennzeichnet, dass der Wicklung (81', 82') des Relais (8) zum Schutz gegen Beeinflussung Dioden (51', 52') parallel geschaltet sind.

4. Schaltungsanordnung nach einem der Ansprüche 1 bis 3, dadurch gekennzeichnet, dass die Serienschaltung der beiden Teilwicklungen (81', 82') mit Anschlüssen für einen, insbesondere veränderbaren Überbrückungswiderstand (5) versehen ist.

5. Schaltungsanordnung nach einem der Ansprüche 1 bis 4, dadurch gekennzeichnet, dass zwei Arbeitskontakte des Relais (8) jeweils mit ihrem Fusspunkt am Verbindungspunkt der beiden Teilwicklungen (81', 82') liegen und mit ihren Arbeitsseiten über je einen der Überbrückungszweige (a, b; a', b') an die äusseren Anschlüsse der Serienschaltung geführt sind.

6. Schaltungsanordnung nach Anspruch 5, dadurch gekennzeichnet, dass bei beidseitiger redundanter Speisung der Fernspeiseschleife und/oder bei einer Anordnung der Wicklung (81', 82') des Relais (8) abwechselnd im einen oder im anderen Zweig der Fernspeiseleitung beide Überbrückungszweige (a, b; a', b') in gleicher Weise ausgebildet sind.

**Revendications**

1. Montage pour la fermeture automatique d'une boucle d'alimentation à distance, utilisée à titre de remplacement, lors de l'interruption de la boucle d'alimentation à distance, prévue lors du fonctionnement normal, d'un dispositif d'alimentation à distance, qui alimente des appareils d'utilisation électriques au moyen d'une alimentation série à courant continu, le montage contenant un relais dont un contact de repos est disposé, ainsi qu'une résistance, dans une branche transversale, l'enroulement du relais betant constitué de deux enroulements partiels branchés ensemble de manière à former un circuit série qui est inséré dans un conducteur de la ligne d'alimentation à distance de telle sorte que la branche transversale est raccordée, d'un côté, au point de jonction des deux enroulements partiels, que l'un de ces deux enroulements est situé dans la boucle d'alimentation à distance utilisée à titre de remplacement et fermée lorsque le contact de repos est fermé, et que l'autre enroulement partiel est situé dans la partie interrompue de la boucle d'alimentation à distance utilisée au cours du fonctionnement normal, caractérisé par le fait qu'il est prévu, dans l'autre conducteur de la ligne d'alimentation à distance, un circuit d'aiguillage branché en parallèle avec un appareil d'utilisation et constitué de deux branches (71, 72) comportant des diodes, et que la branche transversale (73, 83') est raccordée, à son autre extrémité, au point de jonction des deux branches (71, 72) comportant des diodes, et qu'au moins l'un des deux enroulements partiels (81', 82') est muni d'un circuit série formé par un contact de travail du relais (8) et par une branche de court-circuit (a, b; a', b').

2. Montage suivant la revendication 1, caractérisé par le fait que les nombres de spires des deux enroulements partiels (81', 82') sont au moins approximativement égaux.

3. Montage suivant la revendication 1 ou 2, caractérisé par le fait que les diodes (51', 52') sont branchées en parallèle avec l'enroulement (81', 82') du relais (8) de manière à les protéger vis-à-vis de toute influence.

4. Montage suivant l'une des revendications 1 à 3, caractérisé par le fait que le circuit série formé de deux enroulements partiels (81', 82') est muni de bornes pour une résistance de court-circuit (5), notamment pour une résistance de court-circuit variable.

5. Montage suivant l'une des revendications 1 à 4, caractérisé par le fait que deux contacts de travail du relais (8) sont raccordés par leur base au point de jonction des deux enroulements partiels (81', 82') et sont raccordés, par leurs côtés de travail, par l'intermédiaire d'une branche respective faisant partie des branches de court-circuit (a, b; a', b') aux bornes extérieures du circuit série.

6. Montage suivant la revendication 5, caractérisé par le fait que, dans le cas d'une alimentation redondante bilatérale de la boucle d'alimentation à distance et/ou dans le cas du montage de l'enroulement (81', 82') du relais (8) en alternance dans l'une ou dans l'autre branche de la ligne d'alimentation à distance, les deux branches de court-circuit (a, b; a', b') sont réalisées de la même manière.

**Claims**

1. A circuit arrangement for automatically closing a substitute remote feed loop in the event of an interruption in the operational remote feed loop of a remote feed device which feeds electrical loads by d.c. series feed, where the circuit arrangement contains a relay and there is arranged in a shunt arm a rest contact of the relay, together with a resistor, the relay winding consisting of two sub-windings arranged in series in a wire of the remote feed line, so that one side of the shunt arm is connected to the connection point of the two sub-windings and one of the two sub-windings is located in the substitute remote feed loop, closed when the rest contact is closed, whereas the other sub-winding is located in the interrupted section of the operational remote feed loop, characterised in that the other wire of the remote feed line contains a dividing filter circuit of two diode arms (71, 72) arranged parallel to a load and on the other side the shunt arm (73, 83') is connected to the connection point of the two diode arms (71, 72) and at least one of the two sub-windings (81', 82') is provided with a series arrangement consisting of a make contact of the relay (8) and a bridging arm (a, b; a', b').

2. A circuit arrangement as claimed in Claim 1, characterised in that the two sub-windings (81', 82') have an at least approximately equal number of turns.

3. A circuit arrangement as claimed in Claim 1 or 2, characterised in that protective diodes (51', 52') are connected in parallel to the windings (81', 82') of the relay (8).

4. A circuit arrangement as claimed in one of Claims 1 to 3, characterised in that the series arrangement of the two sub-windings (81', 82') is provided with terminals for connecting a bridging resistor (5), preferably an adjustable resistor.

5. A circuit arrangement as claimed in one of Claims 1 to 4, characterised in that two working contacts of the relay (8) are each connected in their rest state to the connection point of the two subwindings (81', 82') and their make contacts are each connected via one of the bridging arms (a, b; a', b') to the outer terminals of the series arrangement.

6. A circuit arrangement as claimed in Claim 5, characterised in that in the event of double-sided redundant feed of the remote feed loop and/or if the winding (81', 82') of the relay (8) is arranged alternately in one or other arm of the remote feed line, the two bridging arms (a, b; a', b') are of identical design.

1/1